(19) Europäisches Patentamt
European Patent Office
Office européen des brevets

(11) **EP 4 265 414 A1**

(12) **EUROPEAN PATENT APPLICATION**
published in accordance with Art. 153(4) EPC

(43) Date of publication:
**25.10.2023 Bulletin 2023/43**

(21) Application number: **21911441.0**

(22) Date of filing: **20.12.2021**

(51) International Patent Classification (IPC):
**B32B 27/08** (2006.01)   **B32B 27/30** (2006.01)
**B32B 27/32** (2006.01)   **B32B 27/40** (2006.01)
**B32B 27/36** (2006.01)   **B32B 27/28** (2006.01)
**C08L 27/06** (2006.01)   **C08L 23/08** (2006.01)
**B29C 43/46** (2006.01)

(52) Cooperative Patent Classification (CPC):
**B29C 43/46; B32B 27/08; B32B 27/28;
B32B 27/30; B32B 27/32; B32B 27/36;
B32B 27/40; C08L 23/08; C08L 27/06**

(86) International application number:
**PCT/KR2021/019420**

(87) International publication number:
**WO 2022/139374 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020   KR 20200180211
21.12.2020   KR 20200180212
17.12.2021   KR 20210181660
17.12.2021   KR 20210181659**

(71) Applicant: **LX Hausys, Ltd.
Seoul 04637 (KR)**

(72) Inventors:
• **KIM, Yujun
Seoul 07796 (KR)**
• **PARK, Gyurim
Seoul 07796 (KR)**
• **LEE, Seunghun
Seoul 07796 (KR)**

(74) Representative: **Zacco Sweden AB
P.O. Box 5581
Löjtnantsgatan 21
114 85 Stockholm (SE)**

(54) **DECORATIVE SHEET AND PREPARATION METHOD THEREOF**

(57)   The present invention relates to a decorative sheet and a preparation method thereof, the decorative sheet having not only the effect of preventing migration of a plasticizer but also excellent low-tackiness, softness, processability, low-temperature resistance, non-whitening property after elongation, heat resistance and weather resistance. The decorative sheet according to the present invention comprises: a first layer; and a second layer, wherein the first layer comprises polyvinyl chloride (PVC) and X/Y copolymer. X is ethylene, and Y is alkyl acrylate having an alkyl group having from 1 to 8 carbon atoms.

FIG. 3

COMPARATIVE EXAMPLE 1          EXAMPLE 1

**Description**

FIELD

The present disclosure relates to a decorative sheet and a method for preparing the same.

**DESCRIPTION OF RELATED ART**

A decorative sheet is a sheet that protects a surface of a material. The decorative sheet is a sheet that expresses natural texture with various printed patterns and embossed patterns, and thus, is widely used not only in a general home, but also on a surface of office furniture, residential furniture, and kitchen furniture.

The decorative sheet mainly contains a polyvinyl chloride (PVC) material, and physical properties such as an abrasion resistance, a heat resistance, a weather resistance, a cold resistance, and a non-whitening properties are required depending on an application environment.

In a case of the decorative sheet, a transparent layer may be disposed on a PVC layer for a protection purpose.

The transparent layer may be a hard coating layer for interior use, and may be a film layer made of a material such as an acrylic material or an ASA for exterior use requiring the weather resistance.

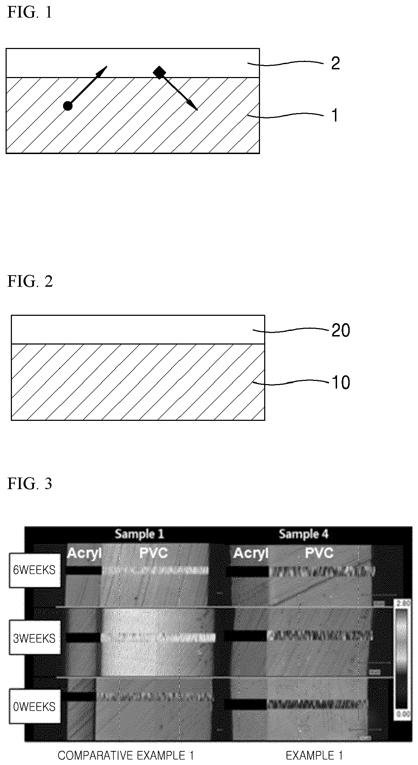

FIG. 1 is a cross-sectional view showing migration paths of a plasticizer and a UV stabilizer in a conventional decorative sheet.

Referring to FIG. 1, the decorative sheet may have a structure in which a transparent layer 2 is deposited on a PVC layer 1. Depending on the application environment, a printed layer (not shown) may be additionally disposed between the PVC layer 1 and the transparent layer 2.

The PVC layer 1 is a film that usually contains the plasticizer so as to exhibit plasticity.

However, there is a problem that, when a plasticizer ● is contained in the PVC layer 1, the plasticizer migrates to the transparent layer 2 and the transparent layer 2 is plasticized, and a UV stabilizer ♦ contained in the transparent layer 2 is diffused into the PVC layer 1 and a UV blocking performance of the transparent layer 2 is lowered.

In addition, when the decorative sheet is stored in a roll form for a long period of time, the migration of the plasticizer causes adhesion to a film in contact with the decorative sheet, resulting in poor buildability and easy deformation of the film.

In addition, in relation to an environmental issue, the decorative sheet containing the plasticizer is harmful to humans and the environment because a toxic gas such as dioxin is generated during incineration.

To solve such problems, attempts have recently been made to apply a non-plasticizer-type PVC layer to the decorative sheet.

However, commercially available non-plasticizer-type PVC layers do not contain the plasticizer and thus prevent the migration of the plasticizer, but have disadvantages such as insufficient softness resulted from insufficient gelation and still low processability.

In one example, a method for applying an eco-friendly polyolefin-based film to the decorative sheet is also being studied, but there is a problem in that it is difficult to fuse the polyolefin-based film with an adherend.

**DISCLOSURE**

**TECHNICAL PURPOSE**

The present disclosure is to provide a decorative sheet that may prevent migration characteristics of a plasticizer.

In addition, the present disclosure is to provide a decorative sheet with excellent low-adhesion, softness, and cold resistance.

In addition, the present disclosure is to provide a method for manufacturing a decorative sheet with improved processability.

In addition, the present disclosure is to provide a decorative sheet having excellent non-whitening properties even after stretching.

In addition, the present disclosure is to provide a decorative sheet having excellent heat resistance and weather resistance.

The purposes of the present disclosure are not limited to the above-mentioned purposes, and other purposes and advantages of the present disclosure that are not mentioned may be understood by the following description and will be more clearly understood by the embodiments of the present disclosure. In addition, it will be readily appreciated that the purposes and the advantages of the present disclosure may be realized by means and combinations thereof shown in the claims.

## TECHNICAL SOLUTION

A decorative sheet according to the present disclosure includes a first layer; and a second layer, the first layer contains polyvinyl chloride (PVC) and an X/Y copolymer, and the X is ethylene and the Y is an alkyl acrylate having an alkyl group with 1 to 8 carbon atoms.

A method for preparing a decorative sheet according to the present disclosure includes (a) mixing polyvinyl chloride (PVC) and an X/Y copolymer with each other to form a mixture, (b) pelletizing the mixture to form pellets, (c) sheeting the formed pellets to prepare a first layer, and (d) disposing a second layer on the first layer, and the X is ethylene and the Y is an alkyl acrylate having an alkyl group with 1 to 8 carbon atoms.

## TECHNICAL EFFECT

The decorative sheet according to the present disclosure has the excellent low-adhesion, softness, processability, and cold resistance as well as the effect of preventing the migration of the plasticizer.

In addition, the decorative sheet according to the present disclosure has the excellent non-whitening properties, heat resistance, weather resistance, and eco-friendliness.

The method for preparing the decorative sheet according to the present disclosure has the effect of improving the processability by sufficiently securing the gelation.

In addition to the above effects, specific effects of the present disclosure will be described together while illustrating specific details for carrying out the present disclosure below.

## BRIEF DESCRIPTION OF DRAWINGS

FIG. 1 is a cross-sectional view showing migration paths of a plasticizer and a UV stabilizer in a conventional decorative sheet.

FIG. 2 is a cross-sectional view showing a decorative sheet according to the present disclosure.

FIG. 3 is a photograph of Raman analysis after Example 1 and Comparative Example 1 were left under conditions of 70 °C and 98 % RH.

FIG. 4 shows a graph showing peel forces under conditions of 10 m/min and 180 ° of samples, which are obtained by stacking the two decorative sheets of Example 1 and stacking the two decorative sheets of Comparative Example 1, after being left at 60 °C for 24 hours.

FIG. 5 shows a photograph and a graph showing a time it takes for a mixture constituting a first layer of Comparative Example 1 is carbonized and deteriorated under heat resistance evaluation conditions.

FIG. 6 shows states of a decorative sheet (a left photo) left for 0 weeks, 3 weeks, and 6 weeks, respectively, under conditions of 70 °C and 98 % RH, and states in which the decorative sheet (a right photo) obtained therefrom is then left for 500 hours under conditions of 63 °C, 63 % RH, and 1500 W/m$^2$ (300 to 400 nm).

FIG. 7 shows a graph showing amounts of change in a color difference value ($\Delta$E) of decorative sheets of Example 1 and Comparative Example 1 based on a time left under conditions of 63 °C, 63 %RH, and 1500W/m$^2$ (300 to 400 nm) after being left for 3 weeks under conditions of 70 °C and 98 % RH.

FIG. 8 is a photograph comparing appearances of decorative sheets after a weather resistance test in FIG. 7 with each other.

[Reference numerals]

10: first layer
20: second layer

## DETAILED DESCRIPTIONS

The above purposes, features, and advantages will be described in detail below with reference to the accompanying drawings. Accordingly, a person having ordinary knowledge in the technical field to which the present disclosure belongs will be able to easily implement the technical idea of the present disclosure. In describing the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

In the following, it may mean that when one component is disposed "on (or below)" or "on a top of (or under)" another component, not only the former may be placed in contact with an upper surface (or a lower surface) of the latter component, but also another intervening component may be interposed between the latter component and the former component disposed on (or below) the latter.

Hereinafter, a decorative sheet and a method for preparing the same according to some embodiments of the present disclosure will be described.

In addition to characteristics of an X/Y copolymer, a non-plasticizer-type decorative sheet according to the present disclosure has secured an effect of preventing migration of a plasticizer, which is difficult to achieve in the past, by performing Banbury mixing, pelletization, and calendering processes, and has further secured all of excellent low-adhesion, softness, processability, cold resistance, non-whitening properties, heat resistance, weather resistance, and eco-friendliness.

FIG. 2 is a cross-sectional view showing a decorative sheet according to the present disclosure.

The decorative sheet according to the present disclosure includes a first layer 10, and includes a second layer 20 of various materials on the first layer 10 depending on an application environment.

The first layer 10 contains polyvinyl chloride (PVC) and the X/Y copolymer, and exhibits overall physical properties required by the decorative sheet.

To prevent the migration characteristics of the plasticizer, it is preferable that, in the X/Y copolymer, X is ethylene and Y is an alkyl acrylate having an alkyl group with 1 to 8 carbon atoms.

Specifically, Y may be an alkyl acrylate having an alkyl group with 2 to 6 carbon atoms and 2 to 4 carbon atoms.

As X is the ethylene and Y is the alkyl acrylate having the alkyl group with the 2 to 4 carbon atoms, the X/Y copolymer may basically prevent the migration characteristics of the plasticizer, and additionally obtain advantages for securing the excellent low-adhesion, softness, processability, and cold resistance. In addition, the X/Y copolymer may obtain advantages for securing the non-whitening properties after stretching, the heat resistance, and the weather resistance.

The X/Y copolymer may impart various characteristics to the decorative sheet depending on a functional group contained in the X/Y copolymer.

The ethylene contained in the X/Y copolymer may impart a strength to the decorative sheet.

The strength affects a yield strength for implementing softness suitable for processing of the decorative sheet.

Because the alkyl acrylate having the alkyl group with the 2 to 4 carbon atoms has a relatively low glass transition temperature (Tg), the excellent softness and cold resistance may be imparted to the decorative sheet.

In addition, the X/Y copolymer contains a small amount of carbon monoxide, and the carbon monoxide improves a strength of bonding with Cl of the polyvinyl chloride (PVC) while imparting a polarity. Accordingly, there is an effect of improving compatibility of the X/Y copolymer and the polyvinyl chloride (PVC).

The X/Y copolymer containing the small amount of carbon monoxide, as a polymer formed from three monomers, may be expressed as an ethylene copolymer, an ethyleneacrylate copolymer, an ethylene terpolymer, an ethylene-containing copolymer, an acrylatecontaining copolymer, and the like.

Because the migration characteristics of the plasticizer have a great influence on the adhesion, the softness, the buildability, the cold resistance, the weather resistance, and the like of the decorative sheet, it is most important to prevent the migration characteristics of the plasticizer in the decorative sheet.

To prevent the migration characteristics of the plasticizer, it is preferable to apply an X/Y copolymer having a relatively great weight-average molecular weight among X/Y copolymers.

As the weight-average molecular weight of the X/Y copolymer increases, the migration characteristics of the plasticizer tend to be prevented.

The weight-average molecular weight of the X/Y copolymer is preferably greater than $1.0 \times 10^5$ and smaller than $5.0 \times 10^5$. Specifically, the weight-average molecular weight may be in a range from $1.5 \times 10^5$ to $4.8 \times 10^5$, in a range from $2.0 \times 10^5$ to $4.5 \times 10^5$, or in a range from $2.5 \times 10^5$ to $4.0 \times 10^5$.

As the weight-average molecular weight of the X/Y copolymer satisfies a range from $1 \times 10^5$ exclusive to $5 \times 10^5$ exclusive, the migration characteristics of the plasticizer may be effectively prevented.

In particular, as the weight-average molecular weight of the X/Y copolymer satisfies the range from $1 \times 10^5$ exclusive to $5 \times 10^5$ exclusive, because of an absence of the migration of the plasticizer, the decorative sheet may have the low-adhesion and may be maintained for a long time without deterioration of the softness, the processability, and the cold resistance.

On the other hand, the plasticizer used in the conventional PVC film has a weight-average molecular weight in a range from 500 to 10,000. Because of a significant amount of migration, the plasticizer with the weight-average molecular weight in the range from 500 to 10,000 has a limit in satisfying all the physical properties required by the decorative sheet.

In addition, when decorative sheet products are stored in an overlapping state, an adhesion may occur caused by the migration of the plasticizer, and the softness, the processability, and the cold resistance may be deteriorated by the migration of the plasticizer.

In a state of the decorative sheet, an ethylene content and an acrylate content of the X/Y copolymer are important factors in securing the softness of the decorative sheet.

As the ethylene content increases, a tensile strength increases, resulting in higher strength but greater hardness. In addition, as the acrylate content increases, the softness and the cold resistance may increase. However, in the case of acrylate, it is preferable that a glass transition temperature (Tg) is low.

The content of the ethylene and the content of the acrylate with the low glass transition temperature must be maintained in an appropriate ratio to satisfy both physical properties and processability of the product.

As 5 to 40 % by weight of an X monomer is contained with respect to a total 100 % by weight of the polyvinyl chloride (PVC) and the X/Y copolymer, the decorative sheet may exhibit excellent mechanical properties.

Specifically, 10 to 35 % by weight, 12 to 30 % by weight, and 12 to 28 % by weight of the X monomer may be contained.

When the content of the X monomer is out of the range from 5 to 40 % by weight, a mechanical strength may be too low, leading to deformation during processing, or the mechanical strength may be too high, leading to processing difficulties and emotional differences from existing products.

The ethylene content of the X/Y copolymer may be identified in the product state using NMR analysis.

As such, because of the components and the weight-average molecular weight of the X/Y copolymer and the content of the X monomer being in the range from 5 to 40 % by weight, the decorative sheet may not only prevent the migration characteristics of the plasticizer compared to the conventional PVC films, and simultaneously exhibit processability and an emotional quality equal or higher than those of the conventional decorative sheet.

Regarding the softness of the decorative sheet, a yield strength of the first layer may be 15 to 25 MPa, preferably 16 to 23 MPa, when measured by stretching the first layer at a rate of 200 mm/min at 25 °C according to ISO 527-3.

With the yield strength in the range from 15 to 25 MPa, the decorative sheet according to the present disclosure may exhibit the softness equal to or higher than that of the conventional decorative sheet and the processability that does not require a change in processing conditions.

When the yield strength is smaller than 15 MPa, the film is easily deformed, and thus, is difficult to be processed. Conversely, when the yield strength exceeds 25 MPa, the film is hard, and thus, is difficult to be bent during 2D processing.

Therefore, when the content of X monomer is in the range from 5 to 40 % by weight, the decorative sheet may exhibit the yield strength in the range from 15 to 25 MPa, and may exhibit the softness and the processability equal to or higher than those of the conventional decorative sheet without using the plasticizer.

The decorative sheet satisfies the conditions of the weight-average molecular weight and the ethylene content of the X/Y copolymer, so that even when the decorative sheet is stored for a long time, the plasticizer does not migrate, and thus, the adhesion does not occur between the films. Therefore, the buildability is improved and the film deformation is prevented.

To evaluate a roll adhesion, two decorative sheets were stacked such that the first layers thereof are in contact with each other and left at 60 °C for 24 hours under a load of 1 kg/cm$^2$. Thereafter, a peel force was measured by peeling the decorative sheets at a rate of 10 m/min and 180 ° using AR-1000 (Chem-instruments).

When measured, the peel force of the decorative sheet may be equal to or smaller than 1100 g/cm$^2$.

Preferably, the peel force of the decorative sheet may be in a range from 500 to 1100 g/cm$^2$, from 700 to 1100 g/cm$^2$, or from 900 to 1100 g/cm$^2$.

Because the alkyl acrylate having the alkyl group with the 2 to 4 carbon atoms in the X/Y copolymer has the relatively low glass transition temperature (Tg), the alkyl acrylate has the effect of imparting the softness and the cold resistance together to the decorative sheet.

To measure the cold resistance, when a cooling solvent and the decorative sheet are in thermal equilibrium while lowering a temperature of the cooling solvent, an impact may be applied to the decorative sheet at a corresponding temperature using a cold impact tester to identify whether the decorative sheet breaks.

Specifically, when the decorative sheet is left at an arbitrary temperature for 1 minute while lowering a temperature of an ethanol solvent and then hit with 20 MPa, the temperature at which the decorative sheet breaks may be equal to or lower than -15 °C and may be preferably in a range from -15 °C to -30 °C or in a range from -20 °C to -30 °C.

In addition to the method for identifying the cold resistance via the impact strength at the low temperature, the cold resistance measurement may also use a method for identifying the cold resistance via comparison of shapes of cross-sections cut using a chainsaw.

The X/Y copolymer is a structure in which the ethylene is polymerized with the alkyl acrylate.

After the polyvinyl chloride (PVC) and the X/Y copolymer are mixed with each other at a high temperature by a Banbury mixer, the mixture is finally sheeted. In the sheeted first layer 10, the polyvinyl chloride (PVC) and the X/Y copolymer do not polymerize to create a new compound, but the polyvinyl chloride (PVC) and the X/Y copolymer exist in the mixed form.

A commercially available non-plasticizer-type decorative sheet has a structure in which the polyvinyl chloride (PVC) is graft-polymerized with the acrylate.

Unlike the graft-polymerized structure, in the decorative sheet according to the present disclosure, the PVC and the X/Y copolymer exist in the mixed form.

As the PVC and the X/Y copolymer exist in the mixed form, the decorative sheet according to the present disclosure may exhibit an amount of change in a brightness value ($\Delta L^*$)< 3, and thus, exhibit the non-whitening properties even after the stretching.

Regarding a measurement of the components of the decorative sheet, whether a vinyl chloride (VC) functional group, an ethylene functional group, and an alkyl acrylate functional group exist may be identified using IR spectrum analysis, NMR analysis, gas chromatography (GC), and the like.

As described above, the decorative sheet according to the present disclosure may simultaneously exhibit the excellent low-adhesion, softness, processability, and cold resistance as well as the effect of preventing the migration of the plasticizer.

To achieve all of such effects, the Banbury mixing, pelletization, and calendering processes must be performed together, not just the characteristics of the X/Y copolymer.

The method for preparing the decorative sheet according to the present disclosure includes mixing the polyvinyl chloride (PVC) and the X/Y copolymer to each other to obtain the mixture, pelletizing the mixture to form pellets, and sheeting the formed pellets to prepare the first layer and depositing the second layer. Therefore, the low-adhesion, softness, processability, and cold resistance effects may be imparted to the decorative sheet together with the effect of preventing the migration of the plasticizer.

To prepare the decorative sheet, the polyvinyl chloride (PVC) and the X/Y copolymer, which are raw materials, are melt-kneaded at a temperature in a range from 90 to 210 °C using the Banbury mixer in advance, resulting in sufficient gelation even at a low shear force.

The Banbury mixer may be set to a high temperature equal to or higher than 90 °C in a closed chamber, so that the raw materials are uniformly dispersed and mixed with each other.

When the raw materials are mixed with each other at a room temperature or at a temperature lower than 90 °C, the mixing of the polyvinyl chloride (PVC) and the X/Y copolymer may not be smoothly performed and there may be portions where the raw materials are not dispersed, which may lower the processability and the physical properties.

The conventional decorative sheet using a PVC resin was prepared by adding a liquid plasticizer to the raw materials, followed by dry mixing, extrusion, and the like.

When the polyvinyl chloride (PVC) and the X/Y copolymer according to the present disclosure are directly added to such a conventional preparing method, there is a limit in the gelation due to a phase separation, and a non-gelled portion is carbonized, resulting in a decrease in the processability.

To solve such problem, in the present disclosure, the Banbury mixing is performed in advance, and at the same time, a degree of polymerization (DP) of the polyvinyl chloride (PVC), which is the raw material, is lowered to 800 or lower and a melting index (MI) of the X/Y copolymer is adjusted to secure the sufficient gelation.

In addition, because the degree of polymerization of the polyvinyl chloride (PVC) is lowered, there is an effect of lowering a load and a processing temperature during the processing. For example, during the processing, a torque of 1 to 10 Nm may be reduced and a processing temperature of 1 to 15 °C may be reduced.

In the process of the Banbury mixing, the present disclosure satisfies one or more parameters of the degree of polymerization of the polyvinyl chloride (PVC) added as the raw material of 400 to 800, the melting index (MI) of the copolymer 20 to 40 g/10 min, a tensile strength of 400 to 600 MPa, and the glass transition temperature of -70 to -40 °C, thereby preparing the decorative sheet having the excellent non-whitening properties after the stretching, and at the same time, having the excellent heat resistance and weather resistance.

Regarding the non-whitening properties, when an amount of change in the brightness value after stretching by 20 % according to ISO 527-3 is $\Delta L^*$, the decorative sheet may represent $\Delta L^* < 3$. Preferably, $0.1 \leq \Delta L^* \leq 2.5$, $0.3 \leq \Delta L^* \leq 2.0$, $0.5 \leq \Delta L^* \leq 1.8$, $0.7 \leq \Delta L^* \leq 1.5$, and $0.8 \leq \Delta L^* \leq 1.0$ may be satisfied.

Regarding the heat resistance, when, using roll mill equipment (SIMPAC Industries, Inc.), a mixture obtained by mixing the polyvinyl chloride (PVC) and the X/Y copolymer to each other at 25 °C is put into the roll mill equipment and a time it takes for the mixture to be carbonized and deteriorated under conditions of 190 °C and 10 RPM is measured, the time it takes for the carbonization and the deterioration may be 40 minutes or longer. Preferably, the time may be 50 minutes or longer to 80 minutes or shorter, 50 minutes or longer to 70 minutes or shorter, 50 minutes or longer to 60 minutes or shorter, or 52 minutes or longer to 60 minutes or shorter.

Regarding the weather resistance, when an amount of change in a color difference value after the decorative sheet is left for 3 weeks under conditions of 70 °C and 98 % RH and then left for 500 hours under conditions of 63 °C, 63 % RH, and 1500 W/m$^2$ (300 to 400 nm) is $\Delta E$, $\Delta E \leq 3$ may be satisfied. Preferably, $\Delta E \leq 2.8$, $\Delta E \leq 2.5$, $\Delta E \leq 2.2$, $\Delta E \leq 1.9$, $\Delta E \leq 1.6$, and $\Delta E \leq 1.3$ may be satisfied.

The technical significance of such parameter will be described as follows.

In general, in a field of decorative sheet technology, the liquid plasticizer was added to the PVC resin, and then the product was processed by the mixing, extrusion, and the sheeting. However, it was difficult to secure long-term weather resistance of the decorative sheet due to the migration characteristics of the plasticizer, and there were problems such as blocking during the processing.

Recently, the decorative sheet containing the non-plasticizer-type PVC has been developed to prevent the migration characteristics of the plasticizer. However, it has been confirmed that the decorative sheet containing the non-plasticizer-type PVC is not sufficient in terms of the buildability due to problems such as whitening when stretching the decorative sheet or lifting during profile lapping caused by a high tensile strength.

To solve such problem, the present inventors selected the X/Y copolymer to prepare the decorative sheet having the excellent physical properties without the plasticizer.

In addition, it was confirmed that, as a result of adjusting the glass transition temperature, the tensile strength, and an added amount of the X/Y copolymer, the yield strength suitable for the processability is exhibited.

The X/Y copolymer that satisfies such characteristics was applied to the conventional preparing process using the PVC, but it was confirmed that the carbonization occurred because the gelation was not sufficiently secured as the phase separation occurred due to a high degree of polymerization of the PVC and compatibility problems between materials.

To secure the gelation and reduce a degree of carbonization, the present inventors lowered the degree of polymerization of the PVC and adjusted the melting index of the copolymer. In addition, the Banbury mixing, which was not used in the conventional PVC preparing process, was used to ensure the sufficient gelation of the material in advance.

As a result of such study, the present inventor confirmed that the non-whitening properties and the heat resistance after the stretching are specified by the degree of polymerization of the PVC and the melting index of the X/Y copolymer, the processability is specified by the glass transition temperature and the tensile strength of the copolymer, and the Banbury mixing should be performed along with such material properties to reduce all the problems of the conventional decorative sheet containing the PVC.

In the present disclosure, to develop the decorative sheet having all of the excellent processability, the non-whitening properties after the stretching, the heat resistance, and the weather resistance, the one or more parameters of the degree of polymerization of the polyvinyl chloride (PVC) of 400 to 800, the melting index (MI) of the copolymer 20 to 40 g/10 min, the tensile strength of 400 to 600 MPa, and the glass transition temperature of -70 to -40 °C may be required, and such parameter ranges and the processing conditions in the preparing method must be satisfied to achieve all of the above effects.

Therefore, in the present disclosure, the degree of polymerization of the polyvinyl chloride (PVC), which is the raw material, may be in the range from 400 to 800. In addition, the melting index (MI) of the X/Y copolymer may be in the range from 20 to 40 g/10 min, preferably in the range from 25 to 35 g/10min.

As the degree of polymerization of the polyvinyl chloride (PVC) of 400 to 800 and the melting index (MI) of the X/Y copolymer of 20 to 40 g/10 min are satisfied, the degree of carbonization may be reduced by securing the sufficient gelation of the material, thereby improving the processability and the heat resistance of the decorative sheet, and exhibiting the excellent non-whitening properties even after the stretching.

The tensile strength of the X/Y copolymer, which is the raw material, may be in the range from 400 to 600 MPa, preferably in the range from 450 to 550 MPa. The glass transition temperature (Tg) of the X/Y copolymer may be in the range from -70 to -40 °C, preferably in the range from -65 to -45 °C.

Because the X/Y copolymer has the low glass transition temperature (Tg) equal to or lower than -40 °C, there is an effect of imparting the softness and the cold resistance to the decorative sheet.

That is, as the X/Y copolymer satisfies the tensile strength of 400 to 600 MPa and the glass transition temperature of -70 to -40 °C, the cold resistance may be imparted to the decorative sheet together with the excellent yield strength, and the excellent softness resulted from the yield strength may be secured.

Accordingly, there is also an effect of improving the processability of the decorative sheet.

To achieve the excellent softness of the decorative sheet, it is preferable to mix 15 to 50 parts by weight of the X/Y copolymer having the tensile strength of 400 to 600 MPa and the glass transition temperature of -70 to -40 °C with respect to 100 parts by weight of the polyvinyl chloride (PVC). Specifically, 15 to 45 parts by weight of the X/Y copolymer may be mixed, and 20 to 40 parts by weight of the X/Y copolymer may be mixed.

When the added amount of the X/Y copolymer is smaller than 15 parts by weight or exceeds 50 parts by weight, it may be insufficient to secure a level of softness suitable for the decorative sheet.

In the X/Y copolymer, which is the raw material, X is the ethylene, Y is the alkyl acrylate having the alkyl group with the 1 to 8 carbon atoms, and a small amount of carbon monoxide (CO) is contained.

The carbon monoxide (CO) may be measured in the decorative sheet state using the IR spectrum analysis, the NMR analysis, the gas chromatography (GC), and the like.

However, because other functional groups also exist in the decorative sheet, it may be difficult to confirm that a measured peak is a peak of the carbon monoxide.

In the process of melting and kneading the raw material, 1 to 10 parts by weight of one or more of a thermal stabilizer, a processing aid, an antioxidant, a lubricant, and the UV stabilizer may be further mixed with respect to 100 parts by weight of the polyvinyl chloride (PVC).

Preferably, 1 to 10 parts by weight of the heat stabilizer and the processing aid may be further mixed with respect to 100 parts by weight of the polyvinyl chloride (PVC).

The thermal stabilizer may include a barium-zinc-based thermal stabilizer, an epoxidized oil, and the like. The barium-zinc-based thermal stabilizer may include BZ-L300.

The epoxidized oil may be at least one of an epoxidized soybean oil (ESO), an epoxidized castor oil, an epoxidized linseed oil, an epoxidized palm oil, an epoxidized stearate, an epoxidized oleate, an epoxidized tall oil, and an epoxidized linoleate.

The epoxidized oil may be a compound obtained by introducing a certain amount of an epoxy group to a vegetable oil via an epoxidation reaction.

The processing aid may include an acrylic processing aid in a form of a polymer with a weight-average molecular weight equal to or greater than 1 million.

For example, the acrylic processing aid may include PA828, PA912, and the like.

Subsequently, the melt-kneaded mixture is pelletized via the extrusion at a temperature range from 90 to 210 °C.

When the melt-kneaded mixture is extruded, foreign substances present in the mixture may be filtered, and defects resulted from the non-dispersion or foaming in the subsequent process of calendaring may be suppressed.

The pellets formed via the extrusion have a length or a diameter equal to or smaller than about 1000 $\mu$m, but the present disclosure is not limited thereto.

Subsequently, the first layer may be prepared by allowing the formed pellets to pass through rollers for rolling mills rotating in opposite directions to be sheeted.

The rollers for the rolling mills are maintained at a temperature in a range from 120 to 200 °C and prepare the sheet continuously by molding.

Because the polyvinyl chloride (PVC) has a property of returning to an original state thereof again because of rubber properties thereof, the sheet form thereof may be preserved via sufficient cooling after the calendering using the rollers for the rolling mills.

Subsequently, the decorative sheet may be prepared by disposing the second layer on the first layer prepared via the Banbury mixing, pelletization, and calendering processes.

The second layer may contain at least one of an acrylic resin, a polyurethane-based resin, a polyester-based resin, a silicone resin, and an amine-based resin, and may preferably contain the acrylic resin.

As such, the decorative sheet according to the present disclosure may exhibit all of the excellent low-adhesion, softness, processability, cold resistance, and the like together with the effect of preventing the migration of the plasticizer only when the Banbury mixing, pelletization, and calendering processes are performed in addition to the material properties of the X/Y copolymer.

In addition, because non-uniform plasticization does not occur in an extruder, there is an effect of improving the heat resistance by reducing the degree of carbonization.

In addition, even when being stretched, the decorative sheet has the non-whitening properties and has an effect of improving the weather resistance.

Thicknesses of the first layer 10 and the second layer 20 constituting the decorative sheet may be in a range from 40 to 250 $\mu$m and in a range from 1 to 70 $\mu$m,

respectively, but may not be limited thereto.

Detailed Examples of the decorative sheet and the method for preparing the same as such are as follows.

**1. Preparation of decorative sheet**

Examples 1 to 10

In the Banbury mixer maintained at 150 °C, 3 parts by weight of the BZ-L300, 3 parts by weight of the ESO, and 3 parts by weight of the PA828 were added as additives with respect to 100 parts by weight of the PVC, which is the raw material, to obtain a product. Then, as shown in Table 1, an ethylene/acrylate copolymer was added to the product and melt-kneaded with the product to form a mixture, so that the sufficient gelation may be secured. Then, the mixture was extruded at 120 °C to be pelletized.

The copolymer contains the alkyl acrylate having the alkyl group with the 2 to 4 carbon atoms, but is a copolymer specified under conditions in Table 1 below.

The formed pellets were passed through the rollers for the rolling mills at 180 °C to be sheeted to prepare the first layer.

The decorative sheet was prepared by depositing an acrylic layer containing a Tinuvin product, which is the UV stabilizer, on the first layer.

The thickness of the first layer is 110 $\mu$m, and a thickness of the acrylic layer is 55 $\mu$m.

[Table 1]

| | Degree of polymerization of PVC | Ethylene/acrylate copolymer | | | | |
|---|---|---|---|---|---|---|
| | | Mw | Added amount (parts by weight) | MI (g/10min) | TS (MPa) | Tg (°C) |
| Example 1 | 800 | 250,000 | 30 | 30 | 500 | -55 |
| Example 2 | 800 | 400,000 | 30 | 30 | 500 | -55 |
| Example 3 | 400 | 250,000 | 30 | 30 | 500 | -55 |
| Example 4 | 800 | 250,000 | 50 | 30 | 500 | -55 |
| Example 5 | 800 | 250,000 | 30 | 20 | 500 | -55 |
| Example 6 | 800 | 250,000 | 30 | 40 | 500 | -55 |
| Example 7 | 800 | 250,000 | 30 | 30 | 400 | -55 |
| Example 8 | 800 | 250,000 | 30 | 30 | 600 | -55 |
| Example 9 | 800 | 250,000 | 30 | 30 | 500 | -40 |
| Example 10 | 800 | 250,000 | 30 | 30 | 500 | -70 |

Comparative Example 1

With respect to 100 parts by weight of the PVC resin, 30 parts by weight of a phthalate plasticizer (Tg -60 °C), and 3 parts by weight of the BZ-L300, 3 parts by weight of the ESO, and 3 parts by weight of the PA828, as the additives, were mixed with each other at 80 °C, and then, extruded at 120 °C. The extrudate was passed through the rollers for the rolling mills at 180 °C to be sheeted to prepare the first layer.

The decorative sheet was prepared by depositing the acrylic layer containing the Tinuvin product, which is the UV stabilizer, on the first layer.

The thickness of the first layer is 110 $\mu$m, and the thickness of the acrylic layer is 55 $\mu$m.

Comparative Example 2

With respect to 100 parts by weight of the PVC resin graft-polymerized with an acrylic rubber, 3 parts by weight of the BZ-L300, 3 parts by weight of the ESO, and 3 parts by weight of the PA828, as the additives, were mixed with each other at 80 °C, and then, extruded at 120 °C. The extrudate was passed through the rollers for the rolling mills at 180 °C to be sheeted to prepare the first layer.

The decorative sheet was prepared by depositing the acrylic layer containing the Tinuvin product, which is the UV stabilizer, on the first layer.

The thickness of the first layer is 110 $\mu$m, and the thickness of the acrylic layer is 55 $\mu$m.

Comparative Examples 3 to 14

As shown in Table 2, the decorative sheets were prepared under the same conditions as Examples 1 to 10, except that the degree of polymerization of the PVC resin and the characteristics of the copolymer were different.

[Table 2]

| | Degree of polymerization of PVC | Ethylene/acrylate copolymer | | | | |
|---|---|---|---|---|---|---|
| | | Mw | Added amount (parts by weight) | MI (g/10min) | TS(MPa) | Tg (°C) |
| Comparative Example 3 | 800 | 100,000 | 30 | 45 | 500 | -55 |

(continued)

| | Degree of polymerization of PVC | Ethylene/acrylate copolymer | | | | |
|---|---|---|---|---|---|---|
| | | Mw | Added amount (parts by weight) | MI (g/ 10min) | TS(MPa) | Tg (°C) |
| Comparative Example 4 | 800 | 500,000 | 30 | 10 | 500 | -55 |
| Comparative Example 5 | 300 | 250,000 | 30 | 30 | 500 | -55 |
| Comparative Example 6 | 1000 | 250,000 | 30 | 30 | 500 | -55 |
| Comparative Example 7 | 800 | 250,000 | 10 | 30 | 500 | -55 |
| Comparative Example 8 | 800 | 250,000 | 60 | 30 | 500 | -55 |
| Comparative Example 9 | 800 | 250,000 | 30 | 10 | 500 | -55 |
| Comparative Example 10 | 800 | 250,000 | 30 | 50 | 500 | -55 |
| Comparative Example 11 | 800 | 250,000 | 30 | 30 | 300 | -55 |
| Comparative Example 12 | 800 | 250,000 | 30 | 30 | 800 | -30 |
| Comparative Example 13 | 800 | 250,000 | 30 | 30 | 500 | -30 |
| Comparative Example 14 | 800 | 250,000 | 30 | 30 | 500 | -80 |

## 2. Physical property evaluation method and result thereof

1) Plasticizer migration characteristics

After leaving the decorative sheet samples under conditions of 70 °C and 98 % RH, migration of the UV stabilizer contained in the acrylic layer was analyzed via Raman analysis.

Whether the UV stabilizer migrates is shown in Tables 3 and 4.

FIG. 3 is a photograph of Raman analysis after Example 1 and Comparative Example 1 were left under conditions of 70 °C and 98 % RH.

Referring to FIG. 3, it is shown that, from week 0 to week 6, in Example 1, a concentration of the UV stabilizer in the first layer (the PVC layer) is maintained as it is.

On the other hand, in 3rd and 6th weeks, in Comparative Example 1, the concentration of the UV stabilizer in the first layer increased. In addition, a UV exposure of the first layer increased due to a decrease in a concentration of the UV stabilizer in the acrylic layer. This means that the UV stabilizer diffused from the acrylic layer.

2) Roll adhesion

After stacking the two decorative sheets with a width of 2 inches X a length of 150 mm such that the first layers thereof are in contact with each other, the sheets were applied with a load of 1 kg/cm$^2$ and left at 60 °C for 24 hours, and then, peeled at 10 m/min and 180 ° using the AR-1000 (Chem-instruments) to measure the peel force of the decorative sheet.

A surface state of the decorative sheet is marked as "excellent" when there was no change in the surface because of no adhesion, and as "poor" when there is the change in the surface because of adhesion.

The peel force and the surface state of the decorative sheet are shown in Tables 3 and 4.

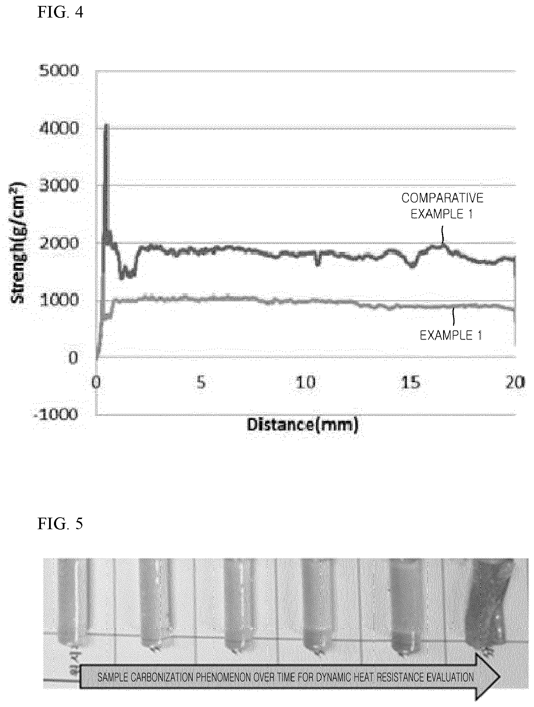

FIG. 4 shows a graph showing peel forces under conditions of 10 m/min and 180 ° of samples, which are obtained by stacking the two decorative sheets of Example 1 and stacking the two decorative sheets of Comparative Example 1, after being left at 60 °C for 24 hours.

Referring to FIG. 4, in Example 1, compared to Comparative Example 1, the adhesive strength of the decorative sheet was reduced to a level of 1/2. The peel force of the decorative sheet of Example 1 is equal to or smaller than 1100 g/cm$^2$.

3) Yield strength

The yield strength of the first layer was measured by stretching the first layer sample at a rate of 200 mm/min at 25 °C according to ISO 527-3. The yield strength of the first layer is shown in Tables 3 and 4.

4) Cold resistance

When the cooling solvent and the decorative sheet are in the thermal equilibrium while lowering the temperature of the ethanol solvent, the impact was applied to the decorative sheet at the corresponding temperature using the cold impact tester (a measurement equipment name: CKLI-50) to identify whether the decorative sheet breaks.

A temperature at which the rolled decorative sheet sample breaks when being left in a cooled solvent for 1 minute and then being hit with a strength of 20 MPa was measured.

When a temperature at which the first layer breaks after being left at the corresponding temperature for 1 minute and hit with 20 MPa while lowering the temperature of the ethanol solvent is in a range from -15 °C to -30 °C, the excellent cold resistance is exhibited.

The cold resistance measurement may use the method for identifying the cold resistance via the comparison of the shapes of the cross-sections cut using the chainsaw in addition to the method for identifying the cold resistance via the impact strength at the low temperature.

The measured temperatures are listed in Tables 3 and 4.

[Table 3]

|  | Migration of UV stabilizer | Peel force (g/cm$^2$)/ surface state | Ethylene content (%)* | Yield strength (MPa) | Breaking temperature (°C) |
|---|---|---|---|---|---|
| Example 1 | Absence | 1000 / Excellent | 25 | 21 | -20 |
| Example 2 | Absence | 1000 / Excellent | 30 | 22 | -20 |
| Example 3 | Absence | 1100 / Excellent | 25 | 18 | -20 |
| Example 4 | Absence | 1000 / Excellent | 25 | 16 | -30 |
| Example 5 | Absence | 1020 / Excellent | 25 | 22 | -20 |
| Example 6 | Absence | 1000 / Excellent | 25 | 20 | -20 |
| Example 7 | Absence | 1050 / Excellent | 20 | 18 | -25 |
| Example 8 | Absence | 1000 / Excellent | 27 | 23 | -20 |
| Example 9 | Absence | 1000 / Excellent | 25 | 22 | -20 |

(continued)

|  | Migration of UV stabilizer | Peel force (g/cm²)/ surface state | Ethylene content (%)* | Yield strength (MPa) | Breaking temperature (°C) |
|---|---|---|---|---|---|
| Example 10 | Absence | 1000 / Excellent | 28 | 18 | -30 |
| * The ethylene content (%) is a value with respect to the total 100 % by weight of the polyvinyl chloride (PVC) and the X/Y copolymer as a result of measuring the first layer via the NMR. | | | | | |

[Table 4]

|  | Migration of UV stabilizer | Peel force(g/cm²)/ surface state | Ethylene content (%)* | Yield strength (MPa) | Breaking temperature (°C) |
|---|---|---|---|---|---|
| Comparative Example 1 | Presence | 2000 / Poor | - | 21 | -20 |
| Comparative Example 2 | Absence | 1000 / Excellent | - | 20 | -15 |
| Comparative Example 3 | Presence | 1600 / Poor | 25 | 19 | -20 |
| Comparative Example 4 | Presence | 1500 / Poor | 25 | 21 | -20 |
| Comparative Example 5 | Absence | 1600 / Poor | 35 | 17 | -20 |
| Comparative Example 6 | Absence | 1500 / Poor | 35 | 22 | -20 |
| Comparative Example 7 | Absence | 1600 / Poor | 35 | 40 | -20 |
| Comparative Example 8 | Absence | 1600 / Poor | 50 | 13 | -20 |
| Comparative Example 9 | Absence | 1500 / Poor | 35 | 25 | -15 |
| Comparative Example 10 | Absence | 1600 / Poor | 33 | 21 | -20 |
| Comparative Example 11 | Absence | 1500 / Poor | 33 | 13 | -25 |
| Comparative Example 12 | Absence | 1600 / Poor | 33 | 32 | 5 |
| Comparative Example 13 | Absence | 1300 / Excellent | 33 | 28 | 0 |
| Comparative Example 14 | Absence | 1300 / Excellent | 33 | 14 | -35 |

5) Stretch whitening

After stretching the decorative sheets of Examples and Comparative Example by 20 % according to ISO 527-3, the amounts of change in the brightness value (ΔL*) according to CIE Lab were measured.

$$\Delta E(L^*, a^*, b^*) = \{(\Delta L^*)^2 + (\Delta a^*)^2 + (\Delta b^*)^2\}^{1/2}$$

In the formula, L*: brightness, a*: green and red color space coordinates, and b*: yellow and blue color space coordinates (based on a CIE Lab color space). $\Delta L^*$ is $L_2^* - L_1^*$, $L_2^*$ is brightness after the stretching, and $L_1^*$ is brightness before the stretching.

When the amount of change in the brightness value ($\Delta L^*$) of the decorative sheet is $\Delta L^* < 3$, the decorative sheet may exhibit the non-whitening properties even after the stretching and maintain an original appearance thereof.

$\Delta L^*$ is shown in Tables 5 and 6.

6) Heat resistance

Using the roll mill equipment (SIMPAC Industries Co., Ltd.), the compositions of Examples and Comparative Examples were put into the equipment in the state of being dry mixed (mixed at 25 °C) and the times it takes for the compositions to be carbonized and deteriorated under the conditions of 190 °C and 10 RPM were measured.

When the time it takes for the carbonization and the deterioration is 40 minutes or longer, the composition has the excellent heat resistance.

The times for the carbonization and the deterioration are listed in Tables 5 and 6.

FIG. 5 shows a photograph and a graph showing a time it takes for a mixture constituting a first layer of Comparative Example 1 is carbonized and deteriorated under heat resistance evaluation conditions.

Referring to FIG. 5, the sample of Comparative Example 1 shows a decrease in the heat resistance because the time it takes for the carbonization and the deterioration is short.

7) Weather resistance based on plasticizer migration characteristics

① In the item 1) Plasticizer migration characteristics, the decorative sheets of Example 1 and Comparative Example 1, which were left under the conditions of 70 °C and 98 % RH to analyze the migration of the UV stabilizer, were left for 500 hours under conditions of 63 °C, 63 % RH, and 1500 W/m$^2$ (300 to 400 nm), and then, whether colors of the sheets were changed were observed with the naked eye.

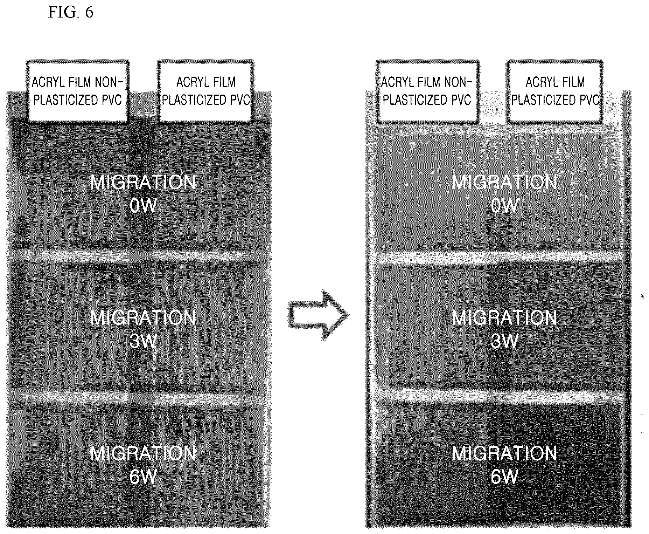

FIG. 6 shows states of a decorative sheet (a left photo) left for 0 weeks, 3 weeks, and 6 weeks, respectively, under conditions of 70 °C and 98 % RH, and states in which the decorative sheet (a right photo) obtained therefrom is then left for 500 hours under conditions of 63 °C, 63 % RH, and 1500 W/m$^2$ (300 to 400 nm).

Referring to FIG. 6, the decrease in the weather resistance did not occur in Example 1, which is the acryl film-non-plasticized PVC, because of the migration prevention. This proves that, despite of the migration evaluation for 0 weeks, 3 weeks, and 6 weeks, the samples under the conditions of 63 °C, 63 % RH, and 1500 W/m$^2$ (300 to 400 nm) exhibit the weather resistance equal to or higher than that of the samples before being left.

That is, there were no difference in a degree of color change based on a period of being left at a high temperature and a high humidity when the samples were observed with the naked eye after being left for 0 weeks, 3 weeks, and 6 weeks under the conditions of 70 °C and 98 % RH, and then, after being left for 500 hours under the conditions of 63 °C, 63 % RH, and 1500 W/m$^2$ (300 to 400 nm).

Examples 2 to 10 exhibit the same results as Example 1.

On the other hand, the decrease in the weather resistance occurred in Comparative Example 1, which is the acryl film-plasticized PVC, because of the migration of the UV stabilizer. It was confirmed that the longer the migration evaluation performed on the sample, that is, the sample left for 3 weeks versus 0 weeks and 6 weeks versus 3 weeks, the more severe color change occurred after strong UV irradiation.

Comparative Examples 3 and 4 exhibit the same results as Comparative Example 1.

② Amounts of change in the color difference value ($\Delta E$) of the decorative sheets of Example and Comparative Example were measured after being left for 3 weeks under the conditions of 70 °C and 98 % RH, and then, left for 500 hours under the conditions of 63 °C, 63 % RH, and 1500 W/m$^2$ (300 to 400 nm).

$$\Delta E(L^*, a^*, b^*) = \{(\Delta L^*)^2 + (\Delta a^*)^2 + (\Delta b^*)^2\}^{1/2}$$

In the formula, L*: the brightness, a*: the green and red color space coordinates, and b*: the yellow and blue color space coordinates (based on the CIE Lab color space).

When the amount of change in the color difference value ($\Delta E$) is $\Delta E \leq 3$, the excellent weather resistance is exhibited.

$\Delta E$ is shown in Tables 5 and 6.

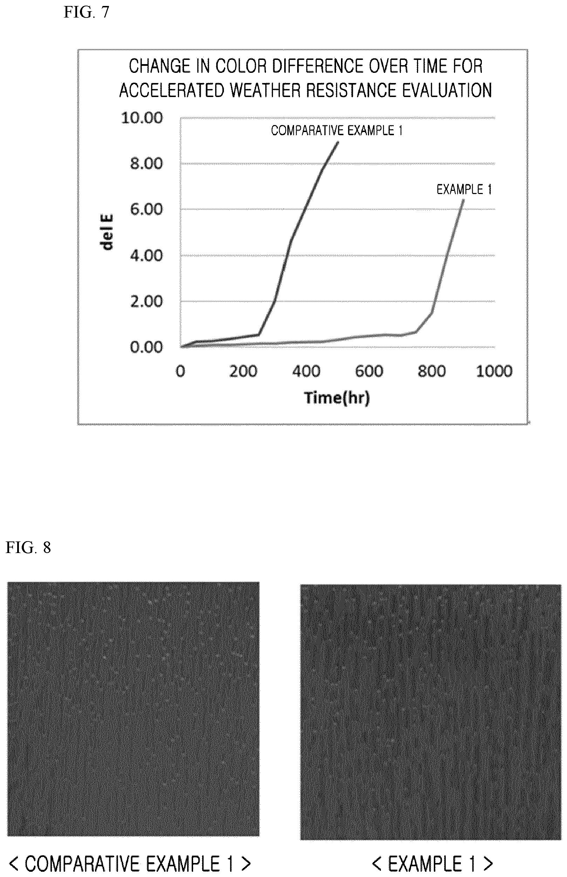

Referring to FIG. 7, the decorative sheet of Example 1 does not change in the color and maintains a good appearance as the amount of change in the color difference value ($\Delta E$) satisfies $\Delta E \leq 2$ even up to 800 hours, thereby exhibiting the excellent weather resistance.

This may also be confirmed by photographs comparing appearances of the decorative sheets with each other in FIG. 8.

Referring to FIG. 8, because the migration of the plasticizer does not occur in the decorative sheet of Example 1 even in a case of storage for a long period of time, the adhesion between the films does not occur, so that the buildability is improved the film deformation is prevented.

[Table 5]

|  | $\Delta L^*$ | Time it takes for carbonization and deterioration | $\Delta E$ |
|---|---|---|---|
| Example 1 | 1 | 55 min | 1.2 |
| Example 2 | 1 | 50 min | 1.3 |
| Example 3 | 0.8 | 60 min | 1.3 |
| Example 4 | 1 | 58 min | 1.1 |
| Example 5 | 0.8 | 52 min | 1.3 |
| Example 6 | 1 | 57 min | 1.3 |
| Example 7 | 1 | 53 min | 1.3 |
| Example 8 | 0.9 | 56 min | 1.1 |
| Example 9 | 1 | 54 min | 1.1 |
| Example 10 | 1 | 58 min | 1.3 |

[Table 6]

|  | $\Delta L^*$ | Time it takes for carbonization and deterioration | $\Delta E$ |
|---|---|---|---|
| Comparative Example 1 | 0.5 | 30 min | 9 |
| Comparative Example 2 | 4 | 15 min | 1.2 |
| Comparative Example 3 | 1 | 30 min | 1.4 |
| Comparative Example 4 | 3 | 30 min | 4 |
| Comparative Example 5 | 1 | 10 min | 2 |
| Comparative Example 6 | 2 | 15 min | 3 |
| Comparative Example 7 | 3 | 30 min | 5 |
| Comparative Example 8 | 1 | 30 min | 1.3 |
| Comparative Example 9 | 3 | 10 min | 4 |
| Comparative Example 10 | 1 | 10 min | 1.2 |
| Comparative Example 11 | 1 | 30 min | 1.3 |
| Comparative Example 12 | 1 | 30 min | 1.3 |
| Comparative Example 13 | 1 | 30 min | 1.2 |
| Comparative Example 14 | 1 | 30 min | 1.3 |

Referring to Tables 3 to 6, the decorative sheet according to the present disclosure shows that the migration of the plasticizer is prevented only when the condition for the weight-average molecular weight is satisfied along with the structural characteristics of the X/Y copolymer.

It may be seen that the decorative sheet according to the present disclosure has all of the excellent low-adhesion, softness, processability, cold resistance, non-whitening properties, heat resistance, and weather resistance together with the effect of preventing the migration of the plasticizer only when the material properties such as the glass transition temperature, the tensile strength, and the content are satisfied and the processing conditions are satisfied.

As described above, the present disclosure has been described with reference to the drawings illustrated, but the present disclosure is not limited by the embodiments disclosed herein and drawings, and it is obvious that various modifications may be made by those skilled in the art within the scope of the technical idea of the present disclosure. In addition, although the operational effects based on the configuration of the present disclosure have not been explicitly described while describing the embodiments of the present disclosure, it is obvious that the effects predictable by the corresponding configuration should also be acknowledged.

**Claims**

1. A decorative sheet comprising:

   a first layer; and a second layer,
   wherein the first layer contains polyvinyl chloride (PVC) and an X/Y copolymer,
   wherein the X is ethylene and the Y is an alkyl acrylate having an alkyl group with 1 to 8 carbon atoms.

2. The decorative sheet of claim 1, wherein the Y is an alkyl acrylate having an alkyl group with 2 to 4 carbon atoms.

3. The decorative sheet of claim 1, wherein the X/Y copolymer has a weight-average molecular weight greater than $1 \times 10^5$ and smaller than $5 \times 10^5$.

4. The decorative sheet of claim 1, wherein when the two decorative sheets are stacked such that the first layers thereof are in contact with each other, then left at 60 °C for 24 hours under a load of 1 kg/cm$^2$, and then peeled at a rate of 10 m/min and 180 ° using AR-1000 (Chem-instruments) to measure a peel force thereof, the peel force of the decorative sheet is equal to or smaller than 1100 g/cm$^2$.

5. The decorative sheet of claim 1, wherein the first layer contains 5 to 40 % by weight of an X monomer with respect to a total of 100 % by weight of the polyvinyl chloride (PVC) and the X/Y copolymer.

6. The decorative sheet of claim 1, wherein a yield strength of the first layer is in a range from 15 to 25 MPa when measured by stretching the first layer at a rate of 200 mm/min at 25 °C according to ISO 527-3.

7. The decorative sheet of claim 1, wherein a breaking temperature of the first layer after the first layer is left at the corresponding temperature for 1 minute and hit with 20 MPa while lowering a temperature of an ethanol solvent is equal to or lower than -15 °C.

8. The decorative sheet of claim 1, wherein when an amount of change in a brightness value of the decorative sheet after stretching by 20 % according to ISO 527-3 is $\Delta L^*$, $\Delta L^* < 3$.

9. The decorative sheet of claim 1, wherein the second layer contains at least one of an acrylic resin, a polyurethane-based resin, a polyester-based resin, a silicone resin, and an amine-based resin.

10. The decorative sheet of claim 1, wherein when an amount of change in a color difference value after the decorative sheet is left for 3 weeks under conditions of 70 °C and 98 % RH and then left for 500 hours under conditions of 63 °C, 63 % RH, and 1500 W/m$^2$ (300 to 400 nm) is $\Delta E$, $\Delta E \leq 3$.

11. A method for preparing a decorative sheet, the method comprising:

    (a) mixing polyvinyl chloride (PVC) and an X/Y copolymer with each other to form a mixture;
    (b) pelletizing the mixture to form pellets;
    (c) sheeting the formed pellets to prepare a first layer; and
    (d) disposing a second layer on the first layer,

    wherein the X is ethylene and the Y is an alkyl acrylate having an alkyl group with 1 to 8 carbon atoms.

12. The method of claim 11, wherein a tensile strength of the X/Y copolymer in the step (a) is in a range from 400 to 600 MPa.

13. The method of claim 11, wherein a glass transition temperature (Tg) of the X/Y copolymer in the step (a) is in a range from -70 to -40 °C.

14. The method of claim 11, wherein a melting index (MI) of the X/Y copolymer is in a range from 20 to 40 g/10 min.

15. The method of claim 11, wherein 15 to 50 parts by weight of the X/Y copolymer is mixed with respect to 100 parts by weight of the polyvinyl chloride (PVC) in the step (a).

16. The method of claim 11, wherein the X/Y copolymer contains carbon monoxide (CO) in the step (a).

17. The method of claim 11, wherein a degree of polymerization (DP) of the polyvinyl chloride (PVC) is in a range from 400 to 800 in the step (a).

18. The method of claim 11, wherein melting and kneading is performed at a temperature range from 90 to 210 °C using a Banbury mixer in the step (a).

19. The method of claim 11, wherein, in the step (a), when the mixture obtained by mixing the polyvinyl chloride (PVC) and the X/Y copolymer to each other at 25 °C is put into roll mill equipment (SIMPAC Industries, Inc.) to measure a time it takes for the mixture to be carbonized and deteriorated under conditions of 190 °C and 10 RPM, the time is 40 minutes or longer.

20. The method of claim 11, wherein the formed pellets pass through rollers for rolling mills rotating in opposite directions to each other so as to be sheeted in the step (c).

FIG. 1

FIG. 2

FIG. 3

FIG. 4

FIG. 5

SAMPLE CARBONIZATION PHENOMENON OVER TIME FOR DYNAMIC HEAT RESISTANCE EVALUATION

FIG. 6

FIG. 7

CHANGE IN COLOR DIFFERENCE OVER TIME FOR ACCELERATED WEATHER RESISTANCE EVALUATION

FIG. 8

< COMPARATIVE EXAMPLE 1 >          < EXAMPLE 1 >

## INTERNATIONAL SEARCH REPORT

| International application No. |
|---|
| **PCT/KR2021/019420** |

### A. CLASSIFICATION OF SUBJECT MATTER

**B32B 27/08**(2006.01)i; **B32B 27/30**(2006.01)i; **B32B 27/32**(2006.01)i; **B32B 27/40**(2006.01)i; **B32B 27/36**(2006.01)i; **B32B 27/28**(2006.01)i; **C08L 27/06**(2006.01)i; **C08L 23/08**(2006.01)i; **B29C 43/46**(2006.01)i

According to International Patent Classification (IPC) or to both national classification and IPC

### B. FIELDS SEARCHED

Minimum documentation searched (classification system followed by classification symbols)

B32B 27/08(2006.01); B32B 27/28(2006.01); B32B 37/00(2006.01); B32B 7/02(2006.01); C08J 5/18(2006.01); C08L 27/06(2006.01); D06M 15/333(2006.01); D06N 3/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리염화비닐(polyvinylchloride, PVC), 에틸렌(ethylene), 아크릴레이트(acrylate), 일산화탄소(carbon monoixde, CO), 필름(film)

### C. DOCUMENTS CONSIDERED TO BE RELEVANT

| Category* | Citation of document, with indication, where appropriate, of the relevant passages | Relevant to claim No. |
|---|---|---|
| X | KR 10-2008-0083870 A (LG CHEM, LTD.) 19 September 2008 (2008-09-19)<br>See claims 1-3; paragraph [0025]; and figure 1. | 1-8,10 |
| Y | | 9,11-20 |
| Y | JP 04-320840 A (SEKISUI CHEM. CO., LTD.) 11 November 1992 (1992-11-11)<br>See claim 1; and paragraphs [0015]-[0033]. | 9,11-20 |
| A | JP 08-208925 A (SUMITOMO BAKELITE CO., LTD.) 13 August 1996 (1996-08-13)<br>See entire document. | 1-20 |
| A | KR 10-2010-0020777 A (LG HAUSYS, LTD.) 23 February 2010 (2010-02-23)<br>See entire document. | 1-20 |
| A | KR 10-0161751 B1 (HANWHA L&C CORPORATION) 15 January 1999 (1999-01-15)<br>See entire document. | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2022** | **11 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/019420**

| Patent document cited in search report | | | Publication date (day/month/year) | Patent family member(s) | | | Publication date (day/month/year) |
|---|---|---|---|---|---|---|---|
| KR | 10-2008-0083870 | A | 19 September 2008 | KR | 10-1242387 | B1 | 14 March 2013 |
| JP | 04-320840 | A | 11 November 1992 | | None | | |
| JP | 08-208925 | A | 13 August 1996 | | None | | |
| KR | 10-2010-0020777 | A | 23 February 2010 | KR | 10-1322043 | B1 | 30 October 2013 |
| KR | 10-0161751 | B1 | 15 January 1999 | CN | 100070413 | C | 05 September 2001 |
| | | | | CN | 100156662 | A | 13 August 1997 |
| | | | | JP | 09-174652 | A | 08 July 1997 |
| | | | | KR | 10-1997-0033825 | A | 22 July 1997 |

Form PCT/ISA/210 (patent family annex) (July 2019)